# EUROPEAN PATENT APPLICATION

(11) **EP 3 771 891 A1**
(43) Date of publication of application: **03.02.2021**
(21) Application number: 19188808.0
(22) Date of filing: 29.07.2019
(51) Int. Cl.: G01F 1/10, G01F 1/12

(54) **TURBINE FLOWMETER**

(71) Applicant: Common S.A., 91-205 Lodz (PL)
(72) Inventor: MAKOWSKI, Zbigniew, 91-205 Lodz (PL); SIEROCINSKI, Pawel, 91-205 Lodz (PL); SKIBA, Konrad, 91-205 Lodz (PL); JANECZEK, Przemyslaw, 91-205 Lodz (PL)
(74) Representative: Markieta, Jaroslaw Franciszek

(57) **Abstract**

Present application relates to an impulse turbine rotor (2) for measuring purposes with a blade assembly (11) designed to work in the flow channel of a flowmeter with a steady state flow at a pressure difference of Δp = 0 between the side upstream of the blade assembly of the impulse turbine rotor and the side downstream of the blade assembly of the impact turbine rotor in the flow direction, wherein the rotor is equipped with compensation openings (14) located in the rotor disk adapted to equalise the pressure difference arising in non-steady flow states between the side upstream of the impulse turbine's blade assembly and the side downstream of the impulse turbine's blade assembly. Further the application relates to an impulse turbine flowmeter (1) with an impulse turbine rotor according to claim 1, wherein the flow channel is equipped with a compensation connector designed to direct flow to the impulse turbine's rotor disk from the side upstream of the turbine's rotor assembly, through the impulse turbine's rotor disk, and to discharge the flow from the turbine's rotor disc on the side downstream of the impulse turbine's rotor assembly.

## Description

The subject of the invention is an impulse turbine rotor for measurement and a flowmeter with such a rotor. The invention is used in measuring fluid flows, in particular gases.

Turbine flowmeters with an impulse rotor are known in the art. Document US 4,186,603 discloses a classic design for a turbine flowmeter. A special feature distinguishing units with impulse rotors from those with reaction rotors is the lack of a pressure difference between the side upstream and downstream of the rotor during steady state operations.

In the state of the art, problems associated with the negative impact of pressure pulsations on flow parameter measurements are known, in particular in relation to turbine flowmeters, as seen in publication 10 "Metrologia przep 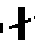 ywów" [Flow metrology] M. Turkowski, Warsaw 2018, Oficyna Wydawnicza Politechniki Warszawskiej, ISBN 978-83-7814-697-1, wherein are described a number of known problems, as well as classic design and analytical solutions aimed at correcting the signal generated by the flowmeter.

The operating conditions of a flowmeter in an actual industrial system usually differ from laboratory conditions during its calibration. One of the major problems in flow metrology is the frequent presence of flow pulsations in industrial systems, since the flowmeter is usually calibrated at steady flow conditions. The pulsations cause significant errors that are difficult to identify and eliminate.

A steady state flow is characterised in that the velocity, pressure, density and temperature change to an extent that it does not affect the result of the fluid stream measurement at the required accuracy level. Formally speaking, only a steady laminarflow can be actually referred to as steady. However, most industrial systems feature a turbulent flow, which is only steady in a statistical sense. This stems from the fact that it demonstrates continuous, random and irregular changes in speed, pressure and temperature. However, if the flow can be deemed to be fully developed and there are no periodic pulsations, then it can be assumed to be steady in a technical sense.

The issues of fluid flow measurement errors in non-steady flow conditions using flowmeters intended for measuring quasi-steady conditions are not fully resolved due to the difficulties in obtaining a mathematical description and the complex structure of posts for the experimental studies of such phenomena.

In the case of turbine flowmeters, the measuring unit is an axial, free-rotating turbine, which in case of a steady flow is characterised by a very close linear relationship between rotational speed and volume flow. The signal associated with the rotational speed is most often obtained by detecting the passage of turbine blades next to a sensor located in the housing. Some flowmeters only collect one impulse per turbine revolution, but a resolution increase stemming from the signal being collected from all blades is very useful in case a pulsation problem exists, as there are methods for extracting information regarding the amplitude and shape of the pulsation wave from changes in the impulse frequency.

When the flow changes over time, the inertia of the turbine and the fluid in the turbine causes the rotor speed to be delayed and in effect lower in relation to the steady flow speed when the flow increases and higher when the flow decreases. This effect is more pronounced in case of an increasing flow rather than a decreasing flow, so the average turbine speed for a flowmeter subject to pulsations is greater than the speed corresponding to the average flow value.

The subject of the invention is the introduction of an impulse turbine rotor in the flow meter, which allows a more accurate flow measurement in non-steady states in comparison with designs known in the art, in particular in case of flow pulsations.

The subject of the invention is an impulse turbine rotor for measuring purposes with a blade assembly designed to work in the flow channel of a flowmeter with a steady state flow at a pressure difference of Δp = 0 between the side upstream of the blade assembly of the impulse turbine's rotor and the side downstream of the blade assembly of the impact turbine's rotor, with the rotor equipped with compensation openings located in the rotor disk, designed to equalise the pressure difference arising in non-steady flow states between the side upstream of the blade assembly and the side downstream of the blade assembly.

In addition, the essential feature of the invention is an impulse turbine flowmeter equipped with an impulse turbine rotor according to the invention, in which the flow channel is equipped with a compensation connector designed to direct flow to the impulse turbine's rotor disk from the side upstream of the turbine's rotor assembly, through the impulse turbine's rotor disk, and to discharge the flow from the turbine's rotor disc on the side downstream of the impulse turbine's rotor assembly.

Preferably, the flowmeter according to the invention is characterised in that the compensation connector comprises an inlet slot directing flow to the impulse turbine's rotor disk from the side upstream of the impulse turbine rotor assembly, compensation openings in the impulse turbine's rotor disc and an outlet slot redirecting flow from the impulse turbine's rotor disc on the side downstream of the turbine's rotor assembly.

Preferably, the flowmeter according to the invention is characterised in that the surface area of the compensation opening in the impulse turbine's rotor disk is greater than or equal to the smaller of the inlet or outlet slot surface areas.

The nature of the invention also includes the use of compensation openings in the impulse rotor disk to compensate for pressure differences at a non-steady flow.

Use according to the invention is characterised in that the compensation openings in the rotor disk compensate for the measurement error resulting from pressure pulsations.

The use of an impulse rotor with a blade assembly connected to the hub in a manner allowing pressure to equalise freely and its installation in the flow channel in accordance with the invention, eliminate the emergence of a pressure differential on the rotor, regardless of its rotational speed and fluid pressure jumps in the system. The assumed structure of the impulse flowmeter ensures the following: the measuring device's resistance to pressure pulsations, lack of axial force from the pressure difference on the rotor, a decrease in the device's power consumption and an increase of the flowmeter's durability.

The subject of the invention is presented in more detail in the preferred embodiment in the drawing, in which:
- Fig. 1: is a cross-sectional diagram of the turbine flowmeter according to the invention;
- Fig. 2: is a perspective diagram of the flowmeter with an impulse rotor according to the invention;
- Fig. 3: is a perspective diagram of the flowmeter with an impulse rotor according to the invention;

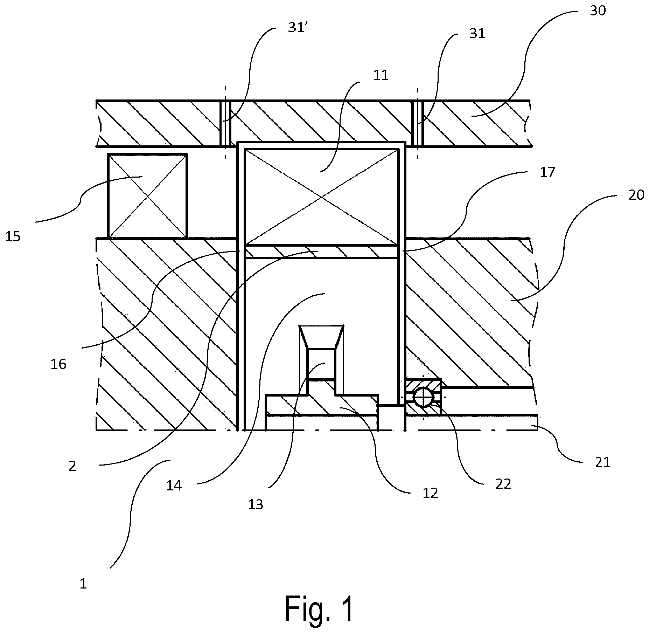

Fig. 1 is a cross-sectional diagram of the turbine flowmeter according to the invention. The flowmeter 1 includes a hub assembly 20 and an external body 30, a flow channel is formed inside the flowmeter between the inner surface of the body 30 and the external surface of the hub assembly 20. The measuring device in the flowmeter according to the invention is an impulse turbine 2, whose blades 11 located in the blade assembly are placed in the flowmeter's flow channel. The impulse turbine rotor 2 is mounted in a rotational system in the hub block 20 by means of a shaft 21 and bearing 22. Inside the side of the hub 20 there are mechanical gearbox elements (not shown) that allow the rotational motion of the impulse turbine rotor 2 to be sent to the sensor and the transducer assemblies, allowing the number of revolutions or rotational speed of the rotor to be measured, which makes it possible to determine the measured volume flow.

The volume measurement is performed on the basis of a constant ratio of the rotational speed of the turbine rotor 2 to the volume flow of the flowing fluid. During the flowmeter's operation its rotor is affected by an axial force resulting from tangential stresses and a force resulting from changes in the direction of the velocity field on the rotor.

In a steady state flow, there is no pressure difference between the side upstream of turbine 2 and downstream of turbine 2 due to the use of a turbine with an impulse rotor. This is typical for impulse turbines. Preferably channels 31, 31' for pressure measurement are used in the structure of flowmeters.

According to the invention an additional compensation connector was introduced in the flowmeter, which allows compensation of pressure changes occurring in non-steady flow states. The compensation connector includes an inlet slot 16 placed in front of the rotor and the outlet slot 17 located behind the rotor, connected in a manner enabling fluid to flow with the compensation area inside the turbine rotor 2, in the central part of the rotor. The rotor disc holding the blade assembly 11 within the flow path is equipped with mounting arms 13 that ensure correct positioning of the blade assembly 11 relative to the rotor axis 12, as well as appropriate rigidity of the rotor of the impulse turbine 2. In addition, there are compensation openings 14 in the rotor disk that assure free flow of fluid between the side upstream and downstream of the rotor. Compensation openings 14 are part of the compensation connector enabling the free flow of fluid between the two sides of the rotor disc.

Compensation openings 14 in the rotor disk have a surface area equal to or greater than the surface area of the inlet or outlet slot, whichever is smaller. Preferably the inlet and outlet slots have an identical surface area. This condition prevents the compensation openings 14 from throttling the flow. The adopted flow system eliminates pressure differences on the rotor Δp = 0 [Pa] in non-steady states. In effect there is no axial force resulting from the pressure difference. In the case of an impulse turbine, any pressure pulsations in the system do not transfer directly to the rotor, but only indirectly by changing the velocity field on the rotor. In effect, this increases the resistance of the flowmeter to pulsations of the measured fluid and contributes to compensating the measurement error resulting from pressure pulsations.

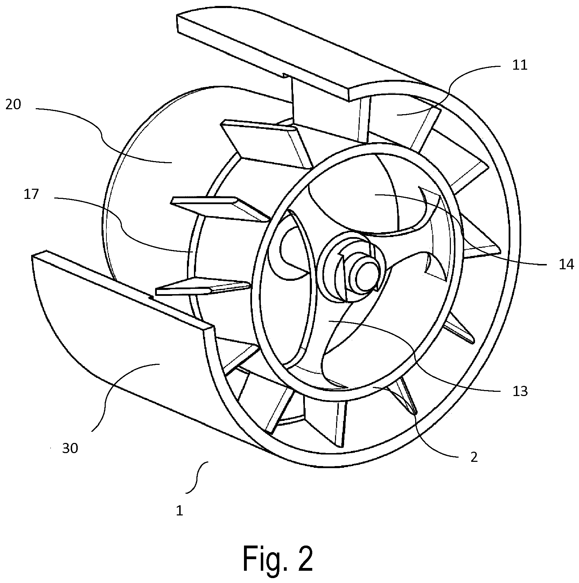

Fig. 2 shows the flowmeter 1 according to the invention in a perspective view. The view is a cut-out view showing the flowmeter from the front, i.e. in the flow direction.

The external body 30 is cut out, so that the external surface of the hub 20 and the outlet slot 17 are visible. This view of the flowmeter 1 shows the impulse turbine rotor 2 fitted with a blade assembly 11. The blade assembly 11 is held in the flow path by a rotor disk in the form of arms 13 mounted on the rotor shaft and running from the rotor shaft towards the blade assembly 11. Fig. 2 shows compensation openings 14, which ensure free fluid flow in non-steady states from the inlet slot (not shown in Fig. 2), through the space inside the rotor of the impulse turbine 2 to the outlet slot 17.

The mounting of the impulse turbine rotor **2** in the hub 20 using a shaft and ball bearing is for reference only. It is possible to use any other installation method appropriate to the nature and parameters of the fluid whose volume is measured by the flowmeter. If the fluid has lubricating properties, plain bearings can be used, while for measuring gases rolling bearings, e.g. ball bearings, are preferable. In each case suitable protection should be implemented to prevent impurities present in the measured fluid from entering the bearing, e.g. a set of filters.

Fig. 2 clearly shows that compensation openings 14 in the rotor disk have a surface area equal to or greater than the surface area of the inlet or outlet slot, whichever is smaller. Such a solution limits the occurrence of errors due to pressure pulsations appearing in the form of non-steady flow states in the system in which the flowmeter is installed.

The solution according to the invention is universal for all impulse turbines, regardless of their shape, size and the parameters of the measured fluid. It is particularly preferable for the solution according to the invention to be used for gas flowmeters, however it can be used to measure liquid volumes.

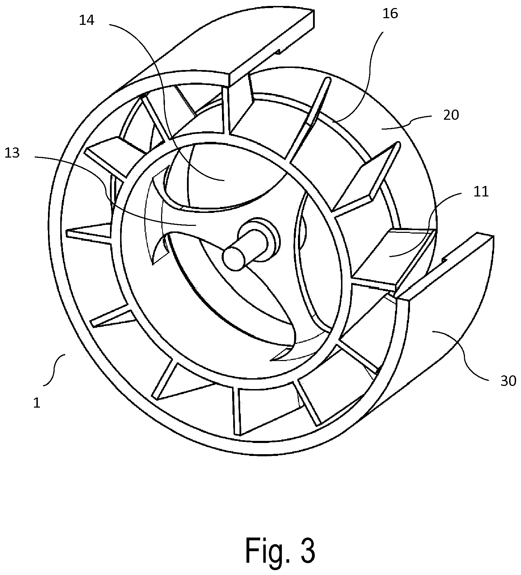

Fig. 3 shows the flowmeter **1** according to the invention in a perspective view. The view is a cut-out view showing the flowmeter from the back, i.e. in the direction opposite to the flow.

The external body 30 is cut out so that the external surface of the hub 20 and the inlet slot 16 are visible. This view of the flowmeter 1 shows the impulse turbine rotor 2 fitted with a blade assembly 11. The blade assembly 11 is held in the flow path by a rotor disk in the form of arms 13 mounted on the rotor shaft and running from the rotor shaft towards the blade assembly 11. Fig. 3 shows compensation openings 14, which ensure free fluid flow in non-steady states from the inlet slot 16, through the space inside the rotor of the impulse turbine 2, to the outlet slot (not shown in Fig. 3).

Fig. 3 also shows that compensation openings 14 in the rotor disk have a surface area equal to or greater than the surface area of the inlet or outlet slot, whichever is smaller.

According to the invention the impulse turbine rotors can be made of metals such as steel, aluminium, bronze etc., in foundry processes or through machining. Rotors made of plastics, in particular electrically conductive plastics, made through injection or 3D printing offer equally good performance.

## Claims

1. An impulse turbine rotor (2) for measuring purposes with a blade assembly (11) designed to work in the flow channel of a flowmeter with a steady state flow at a pressure difference of Δp = 0 between the side upstream of the blade assembly of the impulse turbine rotor and the side downstream of the blade assembly of the impact turbine rotor in the flow direction, **characterized in that**
the rotor is equipped with compensation openings (14) located in the rotor disk adapted to equalise the pressure difference arising in non-steady flow states between the side upstream of the impulse turbine's blade assembly and the side downstream of the impulse turbine's blade assembly.

2. An impulse turbine flowmeter (1) with an impulse turbine rotor according to claim 1, wherein the flow channel is equipped with a compensation connector designed to direct flow to the impulse turbine's rotor disk from the side upstream of the turbine's rotor assembly, through the impulse turbine's rotor disk, and to discharge the flow from the turbine's rotor disc on the side downstream of the impulse turbine's rotor assembly.

3. The flowmeter according to claim 2 wherein the compensation connector features an inlet slot (16) directing flow to the impulse turbine's rotor disk from the side upstream of the impulse turbine's rotor assembly, compensation openings (14) in the impulse turbine's rotor disc and an outlet slot (17) redirecting flow from the impulse turbine's rotor disc on the side downstream of the turbine's rotor assembly.

4. The flowmeter according to claim 2 or 3 wherein the surface area of the compensation openings (14) in the impulse turbine's rotor disk is greater than or equal to the surface area of the inlet or outlet slot, whichever is smaller.

5. A use of compensation openings (14) in the impulse turbine's rotor disk compensates for pressure differences at a non-steady flow.

6. The use according to claim 5 wherein the compensation openings (14) in the impulse turbine's rotor disk compensate for the measurement error resulting from pressure pulsations.
